# EUROPEAN PATENT APPLICATION

(11) **EP 1 988 493 A1**
(43) Date of publication of application: **05.11.2008**
(21) Application number: 07112417.6
(22) Date of filing: 13.07.2007
(51) Int. Cl.: G06N 3/00

(54) **Robotic system and method for controlling the same**

(30) Priority: 30.04.2007 CN 200710027896
(71) Applicant: National Taiwan University of Science and Technology, 106 Taipei City (TW)
(72) Inventor: LIN, Chyi-Yeu, 106, TAIPEI CITY (TW)
(74) Representative: Charrier, Rapp & Liebau

(57) **Abstract**

A method for controlling a robotic system. Expressional and audio information is received by an input unit and transmitted to the processor therefrom. The processor converts the expressional and audio information to corresponding expressional signals and audio signals. The expressional signals and audio signals are received by an expressional and audio synchronized output unit and synchronously transmitted therefrom. An expression generation control unit receives the expressional signals and generates corresponding expressional output signals. Multiple actuators enable an imitative face to create facial expressions according to the expressional output signals. A speech generation control unit receives the audio signals and generates corresponding audio output signals. A speaker transmits speech according to the audio output signals. Speech output from the speaker and facial expression creation on the imitative face by the actuators are synchronously executed.

## Description

### BACKGROUND OF THE INVENTION

### Field of the Invention

The invention relates to a robotic system, and in particular to a method for controlling the robotic system.

### Description of the Related Art

Generally, conventional robots can produce simple motions and speech output.

JP 08107983A2 discloses a facial expression changing device for a robot. The facial expression changing device comprises a head and a synthetic resin mask, providing various facial expressions.

U.S. Patent No. 6,760,646 discloses a robot and a method for controlling the robot. The robot generates humanoid-like actions by operation of a control device, a detection device, a storage device, etc.

### BRIEF SUMMARY OF THE INVENTION

A detailed description is given in the following embodiments with reference to the accompanying drawings.

An exemplary embodiment of the invention provides a robotic system comprising a robotic head, an imitative face, a processor, an input unit, an expressional and audio synchronized output unit, an expression generation control unit, a plurality of actuators, a speech generation control unit, and a speaker. The imitative face is attached to the robotic head. The input unit is electrically connected to the processor, receiving expressional and audio information and transmitting the same to the processor. The processor converts the expressional and audio information to corresponding expressional signals and audio signals. The expressional and audio synchronized output unit is electrically connected to the processor, receiving and synchronously transmitting the expressional signals and audio signals. The expression generation control unit is electrically connected to the expressional and audio synchronized output unit, receiving the expressional signals and generating corresponding expressional output signals. The actuators are electrically connected to the expression generation control unit and connected to the imitative face, enabling the imitative face to create facial expressions according to the expressional output signals. The speech generation control unit is electrically connected to the expressional and audio synchronized output unit, receiving the audio signals and generating corresponding audio output signals. The speaker is electrically connected to the speech generation control unit, transmitting speech according to the audio output signals. Speech output from the speaker and facial expression creation on the imitative face by the actuators are synchronously executed.

The robotic system further comprises an information media input device electrically connected to the input unit. The expressional and audio information is transmitted to the input unit via the information media input device.

The robotic system further comprises a network input device electrically connected to the input unit. The expressional and audio information is transmitted to the input unit via the network input device.

The robotic system further comprises a radio device electrically connected to the input unit. The expressional and audio information is transmitted to the input unit via the radio device.

The robotic system further comprises an audio and image analysis unit and an audio and image capturing unit. The audio and image analysis unit is electrically connected between the input unit and the audio and image capturing unit. The audio and image capturing unit captures sounds and images and transmits the same to the audio and image analysis unit. The audio and image analysis unit converts the sounds and images to the expressional and audio information and transmits the expressional and audio information to the input unit.

The audio and image capturing unit comprises a sound-receiving device and an image capturing device.

The robotic system further comprises a memory unit electrically connected between the processor and the expressional and audio synchronized output unit. The memory unit stores the expressional signals and audio signals.

The processor comprises a timing control device timely actuating the information media input device, network input device, and radio device and transmitting the expressional signals and audio signals from the memory unit to the expressional and audio synchronized output unit.

Another exemplary embodiment of the invention provides a method for controlling a robotic system, comprising providing a robotic head, an imitative face, multiple actuators, and a speaker, wherein the imitative face is attached to the robotic head, the actuators are connected to the imitative face, and the speaker is inside the robotic head; receiving expressional and audio information by an input unit and transmitting the same to the processor therefrom, wherein the processor converts the expressional and audio information to corresponding expressional signals and audio signals; receiving the expressional signals and audio signals by an expressional and audio synchronized output unit and synchronously transmitting the same therefrom; receiving the expressional signals and generating corresponding expressional output signals by an expression generation control unit; enabling the imitative face to create facial expressions by the actuators according to the expressional output signals; receiving the audio signals and generating corresponding audio output signals by a speech generation control unit; and transmitting speech from the speaker according to the audio output signals, wherein speech output from the speaker and facial expression creation on the imitative face by the actuators are synchronously executed.

The method further comprises transmitting the expressional and audio information to the input unit via an information media input device.

The method further comprises timely actuating the information media input device by a timing control device.

The method further comprises transmitting the expressional and audio information to the input unit via a network input device.

The method further comprises timely actuating the network input device by a timing control device.

The method further comprises transmitting the expressional and audio information to the input unit via a radio device.

The method further comprises timely actuating the radio device by a timing control device.

The method further comprises capturing sounds and images by an audio and image capturing unit and transmitting the same to an audio and image analysis unit therefrom; and converting the sounds and images to expressional and audio information by the audio and image analysis unit and transmitting the expressional and audio information to the input unit therefrom.

The method further comprises storing the expressional signals and audio signals converted from the processor by a memory unit.

The method further comprises timely transmitting the expressional signals and audio signals from the memory unit to the expressional and audio synchronized output unit by a timing control device.

### BRIEF DESCRIPTION OF THE DRAWINGS

The invention can be more fully understood by reading the subsequent detailed description and examples with references made to the accompanying drawings, wherein:

FIG. 1 is a schematic profile of a robotic system of an embodiment of the invention;

FIG. 2 is a schematic view of the inner configuration of a robotic system of an embodiment of the invention;

FIG. 3 is a flowchart showing operation of a robotic system of an embodiment of the invention;

FIG. 4 is another flowchart showing operation of a robotic system of an embodiment of the invention; and

FIG. 5 is yet another flowchart showing operation of a robotic system of an embodiment of the invention.

### DETAILED DESCRIPTION OF THE INVENTION

The following description is of the best-contemplated mode of carrying out the invention. This description is made for the purpose of illustrating the general principles of the invention and should not be taken in a limiting sense. The scope of the invention is best determined by reference to the appended claims.

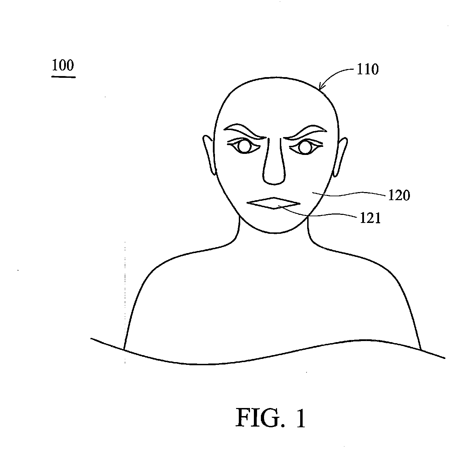

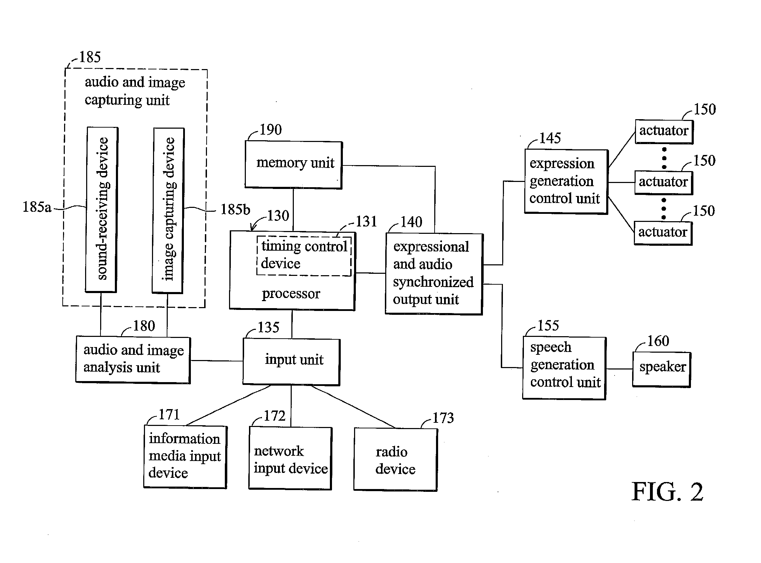

Referring to FIG. 1 and FIG. 2, a robotic system 100 comprises a robotic head 110, an imitative face 120, a processor 130, an input unit 135, an expressional and audio synchronized output unit 140, an expression generation control unit 145, a plurality of actuators 150, a speech generation control unit 155, a speaker 160, an information media input device 171, a network input device 172, a radio device 173, an audio and image analysis unit 180, an audio and image capturing unit 185, and a memory unit 190.

The imitative face 120 is attached to the robotic head 110. Here, the imitative face 120 may comprise elastic material, such as rubber or synthetic resin, and selectively be a humanoid-like, animal-like, or cartoon face.

Specifically, the processor 130, input unit 135, expressional and audio synchronized output unit 140, expression generation control unit 145, speech generation control unit 155, information media input device 171, network input device 172, radio 173, audio and image analysis unit 180, and memory unit 190 may be disposed in the interior or exterior of the robotic head 110.

As shown in FIG. 2, the processor 130 comprises a timing control device 131 and the input unit 135 is electrically connected to the processor 130, receiving expressional and audio information.

The expressional and audio synchronized output unit 140 is electrically connected to the processor 130.

The expression generation control unit 145 is electrically connected to the expressional and audio synchronized output unit 140.

The actuators 150 are electrically connected to the expression generation control unit 145 and connected to the imitative face 120. Specifically, the actuators 150 are respectively and appropriately connected to an inner surface of the imitative face 120. For example, the actuators 150 may be respectively connected to the inner surface corresponding to eyes, eyebrows, a mouth, and a nose of the imitative face 120.

The speech generation control unit 155 is electrically connected to the expressional and audio synchronized output unit 140.

The speaker 160 is electrically connected to the speech generation control unit 155. Here, the speaker 160 may be selectively disposed in a mouth opening 121 of the imitative face 120, as shown in FIG. 1.

As shown in FIG. 2, the information media input device 171, network input device 172, and radio device 173 are electrically connected to the input unit 135. The information media input device 171 may be an optical disc drive or a USB port, and the network input device 172 may be a network connection port with a wired or wireless connection interface.

The audio and image analysis unit 180 is electrically connected between the input unit 135 and the audio and image capturing unit 185. In this embodiment, the audio and image capturing unit 185 comprises a sound-receiving device 185a and an image capturing device 185b. Specifically, the sound-receiving device 185a may be a microphone, and the image capturing device 185b may be a video camera.

The memory unit 190 is electrically connected between the processor 130 and the expressional and audio synchronized output unit 140.

The following description is directed to operation of the robotic system 100.

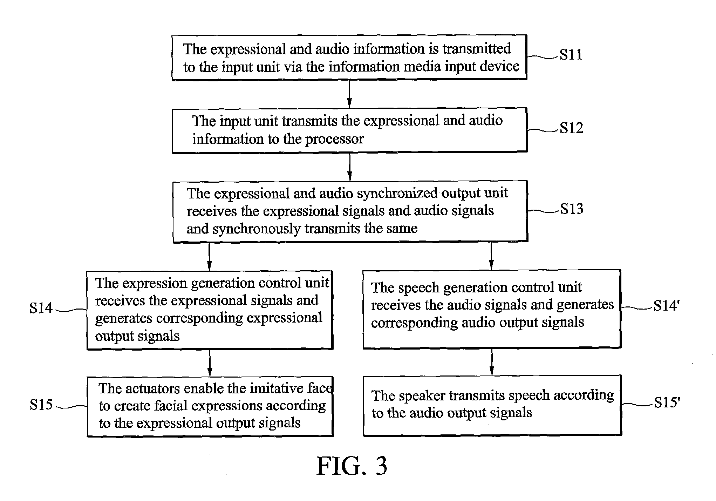

In an operational mode, the expressional and audio information, which may be in a digital or analog form, is transmitted to the input unit 135 via the information media input device 171, as shown by step S11 of FIG. 3. For example, the expressional and audio information can be accessed from an optical disc by the information media input device 171 and received by the input unit 135. The input unit 135 then transmits the expressional and audio information to the processor 130, as shown by step S12 of FIG. 3. Here, by decoding and re-coding, the processor 130 converts the expressional and audio information to corresponding expressional signals and audio signals. The expressional and audio synchronized output unit 140 receives the expressional signals and audio signals and synchronously transmits the same, as shown by step S13 of FIG. 3. The expression generation control unit 145 receives the expressional signals and generates a series of corresponding expressional output signals, as shown by step S14 of FIG. 3. Simultaneously, the speech generation control unit 155 receives the audio signals and generates a series of corresponding audio output signals, as shown by step S14' of FIG. 3. The actuators 150 enable the imitative face 120 to create facial expressions according to the series of corresponding expressional output signals, as shown by step S15 of FIG. 3. Here, the actuators 150 disposed in different positions of the inner surface of the imitative face 120 independently operate according to the respectively received expressional output signals, directing the imitative face 120 to create facial expressions. At the same time, the speaker 160 transmits speech according to the series of audio output signals, as shown by step S15' of FIG. 3. Specifically, by operation of the expressional and audio synchronized output unit 140, speech output from the speaker 160 and facial expression creation on the imitative face 120 by the actuators 150 are synchronously executed. For example, when the robotic system 100 or robotic head 110 executes singing or presents a speech, the imitative face 120 presents corresponding facial expressions.

Moreover, the expressional and audio information transmitted to the input unit 135 via the information media input device 171 may be pre-produced or pre-recorded.

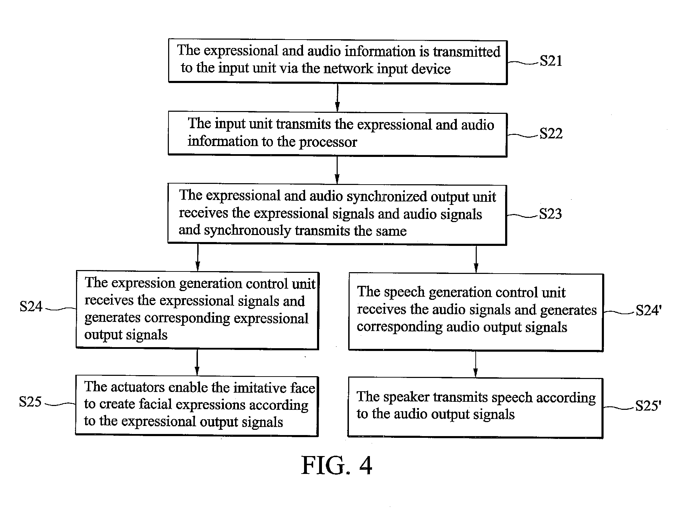

In another operational mode, the expressional and audio information is transmitted to the input unit 135 via the network input device 172, as shown by step S21 of FIG. 4. For example, the expressional and audio information can be transmitted to the network input device 172 via Internet and received by the input unit 135. The input unit 135 then transmits the expressional and audio information to the processor 130, as shown by step S22 of FIG. 4. Here, by decoding and re-coding, the processor 130 converts the expressional and audio information to corresponding expressional signals and audio signals. The expressional and audio synchronized output unit 140 receives the expressional signals and audio signals and synchronously transmits the same, as shown by step S23 of FIG. 4. The expression generation control unit 145 receives the expressional signals and generates a series of corresponding expressional output signals, as shown by step S24 of FIG. 4. Simultaneously, the speech generation control unit 155 receives the audio signals and generates a series of corresponding audio output signals, as shown by step S24' of FIG. 4. The actuators 150 enable the imitative face 120 to create facial expressions according to the series of corresponding expressional output signals, as shown by step S25 of FIG. 4. Similarly, the actuators 150 disposed in different positions of the inner surface of the imitative face 120 independently operate according to the respectively received expressional output signals, driving the imitative face 120 to create facial expressions. At the same time, the speaker 160 transmits speech according to the series of audio output signals, as shown by step S25' of FIG. 4. Similarly, by operation of the expressional and audio synchronized output unit 140, speech output from the speaker 160 and facial expression creation on the imitative face 120 by the actuators 150 are synchronously executed.

Moreover, the expressional and audio information transmitted to the input unit 135 via the network input device 172 may be real-time produced or pre-recorded, and transmitted to the network input device 172.

In yet another operational mode, the expressional and audio information is transmitted to the input unit 135 via the radio device 173. Here, the expressional and audio information received by the radio device 173 and transmitted therefrom is in the form of radio broadcast signals. At this point, the imitative face 120 correspondingly creates specific facial expressions.

Moreover, the expressional and audio information transmitted to the input unit 135 via the radio device 173 may be real-time produced or pre-recorded, and transmitted to the radio device 173.

Moreover, the robotic system 100 or robotic head 110's execution of the aforementioned operation can be scheduled. Specifically, the information media input device 171, network input device 172, and radio device 173 can be timely actuated by setting of the timing control device 131 in the processor 130. Namely, at a specified time, the information media input device 171 transmits the expressional and audio information from the optical disc to the input unit 135, the network input device 172 transmits the expressional and audio information from the internet to the input unit 135, or the radio device 173 receives the broadcast signals, enabling the robotic system 100 or robotic head 110 to execute the aforementioned operation, such as news broadcast and greeting.

Moreover, after the processor 130 converts the expressional and audio information, which is transmitted from the information media input device 171 or the network input device 172 or the radio device 173, to the corresponding expressional signals and audio signals, the memory unit 190 may selectively store the same. Similarly, by setting the timing control device 131 in the processor 130, the expressional signals and audio signals can be timely transmitted from the memory unit 190 to the expressional and audio synchronized output unit 140, enabling the robotic system 100 or robotic head 110 to execute the aforementioned operation.

Moreover, the expressional and audio information received by the input unit 135 may be synchronous, non-synchronous, or synchronous in part. Nevertheless, the expressional and audio information may have built-in timing data, facilitating the processor 130 and expressional and audio synchronized output unit 140 to synchronously process the expressional and audio information.

Additionally, the robotic system 100 further provides the following operation.

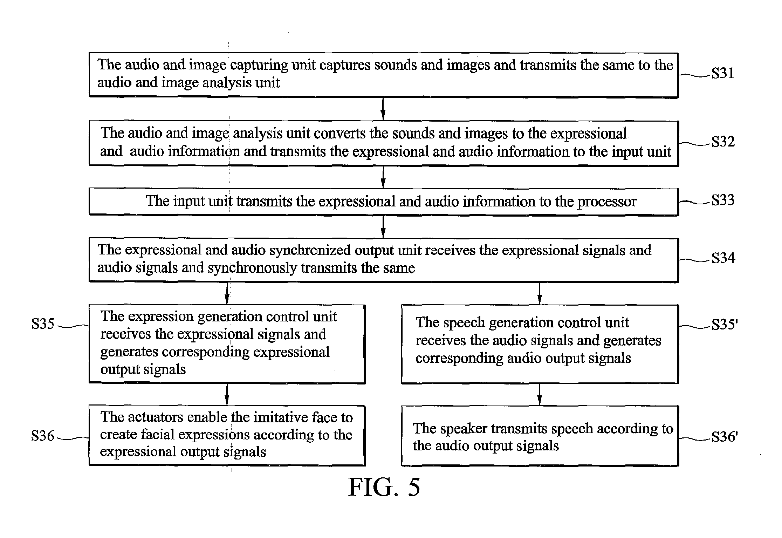

The audio and image capturing unit 185 captures sounds and images and transmits the same to the audio and image analysis unit 180, as shown by step S31 of FIG. 5. Specifically, the sound-receiving device 185a and image capturing device 185b of the audio and image capturing unit 185 respectively receive the sounds and images outside the robotic system 100. For example, the sound-receiving device 185a and image capturing device 185b respectively receive the sounds and images of a source. The audio and image analysis unit 180 then converts the sounds and images to the expressional and audio information and transmits the expressional and audio to the input unit 135, as shown by step S32 of FIG. 5. The input unit 135 transmits the expressional and audio information to the processor 130, as shown by step S33 of FIG. 5. Here, by decoding and re-coding, the processor 130 converts the expressional and audio information to corresponding expressional signals and audio signals. The expressional and audio synchronized output unit 140 receives the expressional signals and audio signals and synchronously transmits the same, as shown by step S34 of FIG. 5. The expression generation control unit 145 receives the expressional signals and generates a series of corresponding expressional output signals, as shown by step S35 of FIG. 5. Simultaneously, the speech generation control unit 155 receives the audio signals and generates a series of corresponding audio output signals, as shown by step S35' of FIG. 5. The actuators 150 enable the imitative face 120 to create facial expressions according to the series of corresponding expressional output signals, as shown by step S36 of FIG. 5. Here, the actuators 150 disposed in different positions of the inner surface of the imitative face 120 independently operate according to the respectively received expressional output signals, driving the imitative face 120 to create facial expressions. At the same time, the speaker 160 transmits speech according to the series of corresponding audio output signals, as shown by step S36' of FIG. 5. Similarly, by operation of the expressional and audio synchronized output unit 140, speech output from the speaker 160 and facial expression creation on the imitative face 120 by the actuators 150 are synchronously executed. Accordingly, the robotic system 100 or robotic head 110 can revive the sounds and images of an external source according to the received sounds and images, providing functions of entertainment.

Similarly, after the processor 130 converts the expressional and audio information, which is transmitted from the audio and image analysis unit 180, to the corresponding expressional signals and audio signals, the memory unit 190 may selectively store the same. Similarly, by setting of the timing control device 131 in the processor 130, the expressional signals and audio signals can be timely transmitted from the memory unit 190 to the expressional and audio synchronized output unit 140, enabling the robotic system 100 or robotic head 110 to execute the aforementioned operation.

In conclusion, the disclosed robotic system or robotic head can serve as an entertainment center. The disclosed robotic system or robotic head can synchronously present corresponding facial expressions when a singer or vocalist delivers a vocal performance, achieving effects of imitation.

While the invention has been described by way of example and in terms of preferred embodiment, it is to be understood that the invention is not limited thereto. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. A robotic system, comprising:
a robotic head;
an imitative face attached to the robotic head;
a processor;
an input unit electrically connected to the processor, receiving expressional and audio information and transmitting the same to the processor, wherein the processor converts the expressional and audio information to corresponding expressional signals and audio signals;
an expressional and audio synchronized output unit electrically connected to the processor, receiving and synchronously transmitting the expressional signals and audio signals;
an expression generation control unit electrically connected to the expressional and audio synchronized output unit, receiving the expressional signals and generating corresponding expressional output signals;
a plurality of actuators electrically connected to the expression generation control unit and connected to the imitative face, enabling the imitative face to create facial expressions according to the expressional output signals;
a speech generation control unit electrically connected to the expressional and audio synchronized output unit, receiving the audio signals s and generating corresponding audio output signals; and
a speaker electrically connected to the speech generation control unit, transmitting speech according to the audio output signals, wherein speech output from the speaker and facial expression creation on the imitative face by the actuators are synchronously executed.

2. The robotic system as claimed in claim 1, further comprising an information media input device electrically connected to the input unit, wherein the expressional and audio information is transmitted to the input unit via the information media input device.

3. The robotic system as claimed in claim 2, wherein the processor comprises a timing control device timely actuating the information media input device

4. The robotic system as claimed in claim 1, further comprising a network input device electrically connected to the input unit, wherein the expressional and audio information is transmitted to the input unit via the network input device.

5. The robotic system as claimed in claim 4, wherein the processor comprises a timing control device timely actuating the network input device.

6. The robotic system as claimed in claim 1, further comprising a radio device electrically connected to the input unit, wherein the expressional and audio information is transmitted to the input unit via the radio device.

7. The robotic system as claimed in claim 6, wherein the processor comprises a timing control device timely actuating the radio device.

8. The robotic system as claimed in claim 1, further comprising an audio and image analysis unit and an audio and image capturing unit, wherein the audio and image analysis unit is electrically connected between the input unit and the audio and image capturing unit, the audio and image capturing unit captures sounds and images and transmits the same to the audio and image analysis unit, and the audio and image analysis unit converts the sounds and images to the expressional and audio information and transmits the expressional and audio information to the input unit.

9. The robotic system as claimed in claim 8, wherein the audio and image capturing unit comprises a sound-receiving device and an image capturing device.

10. The robotic system as claimed in claim 1, further comprising a memory unit electrically connected between the processor and the expressional and audio synchronized output unit, storing the expressional signals and audio signals.

11. The robotic system as claimed in claim 10, wherein the processor comprises a timing control device timely transmitting the expressional signals and audio signals from the memory unit to the expressional and audio synchronized output unit.

12. A method for controlling a robotic system, comprising:
providing a robotic head, an imitative face, multiple actuators, and a speaker, wherein the imitative face is attached to the robotic head, and the actuators are connected to the imitative face;
receiving expressional and audio information by an input unit and transmitting the same to the processor therefrom, wherein the processor converts the expressional and audio information to corresponding expressional signals s and audio signals;
receiving the expressional signals and audio signals by an expressional and audio synchronized output unit and synchronously transmitting the same therefrom;
receiving the expressional signals and generating corresponding expressional output signals by an expression generation control unit;
enabling the imitative face to create facial expressions by the actuators according to the expressional output signals;
receiving the audio signals and generating corresponding audio output signals by a speech generation control unit; and
transmitting speech from the speaker according to the audio output signals, wherein speech output from the speaker and facial expression creation on the imitative face by the actuators are synchronously executed.

13. The method as claimed in claim 12, further comprising transmitting the expressional and audio information to the input unit via an information media input device.

14. The method as claimed in claim 13, further comprising timely actuating the information media input device by a timing control device.

15. The method as claimed in claim 12, further comprising transmitting the expressional and audio information to the input unit via a network input device.

16. The method as claimed in claim 15, further comprising timely actuating the network input device by a timing control device.

17. The method as claimed in claim 12, further comprising transmitting the expressional and audio information to the input unit via a radio device.

18. The method as claimed in claim 17, further comprising timely actuating the radio device by a timing control device

19. The method as claimed in claim 12, further comprising:
capturing sounds and images and transmitting the same to an audio and image analysis unit by an audio and image capturing unit; and
converting the sounds and images a to the expressional and audio information and transmitting the expressional and audio information to the input unit by the audio and image analysis unit.

20. The method as claimed in claim 19, wherein the audio and image capturing unit comprises a sound-receiving device and an image capturing device.

21. The method as claimed in claim 12, further comprising storing the expressional signals and audio signals converted from the processor by a memory unit.

22. The method as claimed in claim 21, further comprising timely transmitting the expressional signals and audio signals from the memory unit to the expressional and audio synchronized output unit by a timing control device.
